# EUROPÄISCHE PATENTSCHRIFT

(11) **EP 3 544 736 B1**
(45) Veröffentlichungstag und Bekanntmachung des Hinweises auf die Patenterteilung: **14.06.2023**
(21) Anmeldenummer: 18706254.2
(22) Anmeldetag: 19.02.2018
(51) Int. Cl.: B01L 3/00, B01L 9/06

(54) **PROBENSTÄNDER UND PROBENTRÄGERSYSTEM**
SAMPLE RACK AND SAMPLE CARRIER SYSTEM
SUPPORT D'ÉCHANTILLON ET SYSTÈME PORTEUR D'ÉCHANTILLON

(43) Veröffentlichungstag der Anmeldung: 02.10.2019
(73) Patentinhaber: TECAN TRADING AG, 8708 Männedorf (CH)
(72) Erfinder: WOLF, Markus, 8708 Männedorf (CH); SCHINZEL, Fred, 8708 Männedorf (CH)
(74) Vertreter: Troesch Scheidegger Werner AG
(86) Internationale Anmeldenummer: PCT/EP2018/054045
(87) Internationale Veröffentlichungsnummer: WO 2019/158221

(56) Entgegenhaltungen:
- EP-A1- 0 738 541
- EP-A1- 0 738 541
- EP-A1- 3 088 903
- EP-A1- 3 088 903
- EP-A2- 0 895 813
- EP-A2- 0 895 813
- CN-B- 101 097 222
- DE-U1- 29 910 885
- DE-U1-202012 102 667
- US-A- 4 877 134

## Beschreibung

Die vorliegende Erfindung betrifft ein Probenträgersystem zum Einbringen von sich in einem Probenständer befindlichen Proben und Reagenzien in einen Analyseautomaten.

Geht es darum, eine grosse Anzahl an Proben in möglichst kurzer Zeit zu messen, bietet sich der Einsatz von Analyseautomaten an. Diese sind ausgelegt auf das Bestimmen eines oder mehrerer Analyten in einer Vielzahl bereitgestellter Proben und werden häufig für Routineanalysen im Gesundheitsbereich eingesetzt. Insbesondere hier ist es jedoch von grosser Bedeutung, dass die Analyseergebnisse so zuverlässig wie möglich sind und eindeutig der Probe respektive deren Ursprung zugeordnet werden können. Mit der Anzahl der zu analysierenden Proben steigt jedoch gerade die Gefahr einer Probenverwechslung und weiter verkompliziert sich das fachgerechte Handling der einzusetzenden Reagenzien, insbesondere wenn unterschiedliche Reagenzien zu verwenden sind und nicht für alle Proben im Analyseautomaten dasselbe Analyseprogramm gefahren wird. Neben der Verwechslungsgefahr die Probe bzw. den Probenursprung betreffend, kann es jedoch auch zu einer Verwechslung der Reagenzien kommen, sodass auch auf diesem Wege ein inkorrektes Analyseresultat erhalten werden kann.

Zwar gibt es bereits verschiedene Möglichkeiten, dem Analyseautomaten Informationen über die zu analysierenden Proben respektive über die für die Analyse benötigten Reagenzien und deren Position zuzuführen, jedoch sind diese meist aufwendig und in ihrer Leistungsfähigkeit limitiert.

Ein Standardverfahren besteht beispielsweise darin, die Probenröhrchen, in denen sich die Proben bzw. Reagenzien befinden, mit einem Barcode zu versehen und jedes einzelne Röhrchen von Hand einzuscannen. Die Software teilt dem Benutzer nach dem Scannen eines Röhrchens mit, auf welche Position im Analyseautomat besagtes Röhrchen zu positionieren ist. Einen Kontrollmechanismus, ob das Röhrchen tatsächlich an der vorgesehenen Stelle positioniert wurde, gibt es nicht. Dementsprechend ist ein solches System anfällig für Fehler, die durch falsches Zuordnen eines Analyseergebnisses zu einer Probe bedingt sind. Weiter ist dieses Vorgehen besonders für empfindliche Proben bzw. Reagenzien, die beispielsweise gekühlt werden müssen, schwierig, da durch das einzelne Einbringen keine kontrollierte Umgebung geschaffen werden kann. Eine Folge kann ein verfälschtes Analyseergebnis aufgrund einer degenerierten Probe oder eines degenerierten Reagenzes sein.

Zum Schaffen einer kontrollierten Umgebung, aber auch um das Handling zu verbessern, können mit Positionsbarcodes ausgestattete Probenracks eingesetzt werden. Beispielsweise kann es sich bei dem Probenrack um einen mit Wasserschlangen oder Peltier-Elementen gekühlten Block handeln, der die Proben bzw. Reagenzien bis zur tatsächlichen Analyse stabil hält. Die Probenröhrchen müssen hier nicht einzeln in den Analyseautomaten eingebracht werden, sondern werden erst in das Probenrack, auch Probenständer genannt, eingebracht und zwar genau an die Position im Probenrack, die diesem Probenröhrchen nach dem Scannen mit dem Handscanner von der Software zugewiesen wurde. Ist das Probenrack befüllt, kann es in den Analyseautomaten eingebracht werden. Der Analyseautomat wiederum beinhaltet einen eigenen Scanner, der dann den Positionsbarcode auf dem Probenrack ausliest und somit über die vorhergehende, von der Software angegebene und vom Benutzer ausgeführte Zuordnung "Probe/Reagenz zu Position im Probenrack" weiss, welche Probe analysiert wird. Jedoch kann es auch hier zu Fehlern bei der Zuordnung von Analyseergebnissen zu den Proben kommen, da nicht sichergestellt werden kann, dass eine Probe bzw. Reagenz vom Benutzer tatsächlich an die für diese Probe bzw. dieses Reagenz vorgesehene Position im Probenrack eingebracht wurde. Aus der Patentanmeldung WO2018015483 (A1) ist beispielsweise eine Trägereinheit (oftmals "Strip Rack" genannt) bekannt, in die mit je einem Barcode versehene Probenröhrchen eingebracht sind. Die Trägereinheit selbst ist mittels eines auf ihr aufgebrachten Barcodes identifizierbar. Eine solche Trägereinheit wird dann meist manuell entlang eines Einschubpfades auf einem Arbeitsfeld eingeschoben. Die auf dem Arbeitsfeld angeordnete Barcodeleseeinheit muss derart ausgeführt und relativ zum Einschubpfad angeordnet sein, dass der Barcode jedes einzelnen Probenröhrchen beim Einschieben bzw. Einbringen der Trägereinheit ungehindert und zuverlässig gelesen bzw. erkannt werden kann.

Die Aufgabe der vorliegenden Erfindung besteht darin, ein Probenträgersystem bereitzustellen, das Fehler bei der Analyse von Proben minimiert oder Fehlerquellen gar ausschliesst. Ein weiterer Aspekt der vorliegenden Erfindung besteht darin, einen Probenständer bereitzustellen, der Fehler bei der Analyse von Proben minimiert oder Fehlerquellen gar ausschliesst.

Die Aufgabe wird gelöst durch ein Probenträgersystem nach einem der Ansprüche 1 oder 2. Zunächst beschrieben ist jedoch ein Probenständer für ein solches Probenträgersystem, welcher Probenständer mindestens eine axial ausgedehnte Aufnahme für ein Probenröhrchen und eine auf der Aussenseite des Probenständers angeordnete Codeanordnung umfasst. Die Codeanordnung enthält sowohl Informationen bezüglich der Position der mindestens einen Aufnahme als auch Informationen bezüglich der totalen Anzahl an Aufnahmen und/oder der Dimension des Probenständers.

Aus einer solchen Codeanordnung kann einerseits abgelesen werden, welche Position einer Aufnahme zugeordnet ist. Z.B. können bei einer Gesamtzahl von fünf Aufnahmen die Positionen 1, 2, 3, 4 und 5 vergeben werden. Alternativ zu solchen Positionsnummern bzw. Positionszeichen (anstelle von 1, 2, 3...können die Positionen auch A, B, C... oder dergleichen genannt werden), kann mit der Position einer Aufnahme auch deren Ortskoordinaten, sprich deren absolute oder relative Lage (Lage im Sinne von Ortsangabe) im Probenständer, gemeint sein. In einem Probenständer, der z.B. 18 cm lang und 6 cm breit ist und fünf Aufnahmen für Probenröhrchen umfasst, die in einer Reihe angeordnet sind, können den Aufnahmen beispielsweise die fünf Positionen "3/3", "6/3", "9/3", "12/3" und "15/3" zugeordnet werden. Die so definierten Positionen (Angabe in "Länge [cm]/Breite [cm]") sind zurückzuführen auf die Lage der einzelnen Aufnahmen in Relation zur Länge und Breite des Probenständers. Andererseits kann aus einer solchen Codeanordnung auch noch abgelesen werden, wie viele Aufnahmen, und somit Positionen, der Probenständer insgesamt umfasst und/oder welche Dimension (z.B. Länge, Breite und/oder Höhe), insbesondere Grösse (z.B. relative Länge, Breite und/oder Höhe alias klein, mittel, gross), der Probenständer aufweist. Beispielsweise kann es drei verschiedenen Grössen an Probenständern geben und über die Codeanordnung kann ausgelesen werden, ob es sich um einen kleinen, einen mittleren oder um einen grossen Probenständer handelt. Alternativ kann die Codeanordnung auch darüber informieren, ob es sich um einen Probenständer mit z.B. insgesamt sieben, zehn oder zwölf Aufnahmen handelt. Auch können die tatsächlichen Masse zweier Probenständer identisch sein (z.B. mittlere Grösse), jedoch fasst der eine sieben grosse Probenröhrchen, der andere hingegen fasst zehn kleine Probenröhrchen. Hier bietet es sich an, wenn die Codeanordnung einerseits darüber informiert, wie viele Aufnahmen vorhanden sind und andererseits für welche Art von Probenröhrchen diese Aufnahmen geeignet sind. Zusätzlich oder anstelle der Anzahl an Aufnahmen kann auch die Dimension angegeben werden (z.B. mittlere Grösse) in Kombination mit dem Hinweis für welche Art von Probenröhrchen der Probenständer geeignet ist. Weiter kann die Codeanordnung beispielsweise Informationen darüber enthalten, ob es sich um einen Probenständer handelt, dessen Aufnahmen für Probenröhrchen in einer Reihe oder in zwei oder mehreren Reihen angeordnet sind. Darüber hinaus, für den Fall einer mehrreihigen Anordnung, kann die Codeanordnung Informationen darüber enthalten, ob die Aufnahmen für Probenröhrchen der einen Reihe (z.B. erste Reihe) versetzt sind zu oder auf gleicher Höhe angeordnet sind wie die Aufnahmen für Probenröhrchen einer anderen Reihe (z.B. zweite Reihe).

Es wird darauf hingewiesen, dass zwar wortwörtlich von einer Aufnahme für ein Probenröhrchen und dementsprechend von einem Probenröhrchen die Rede ist, jedoch ein solches Probenröhrchen nicht zwangsläufig eine zu analysierende Probe beinhalten muss, sondern dass ein solches Probenröhrchen auch ein Reagenz, welches zum Analysieren verwendet wird, beinhalten kann und das Röhrchen auch als Fläschchen ausgestaltet sein kann. Die Erfindung, deren weitere Aspekte und alle Ausführungsformen sind dementsprechend anwendbar auf zu analysierende Proben, aber auch auf für die Analyse verwendete Reagenzien inklusive Waschflüssigkeiten, Pufferlösungen oder andere Verdünnungslösungen. Dementsprechend kann der Probenständer auch ein Reagenzienständer sein, der Probenträger auch ein Reagenzienträger, und das Probenträgersystem auch ein Reagenzienträgersystem.

In einer Ausführungsform des Probenständers, welche mit jeder der noch zu nennenden Ausführungsformen kombiniert werden kann, sofern nicht im Widerspruch dazu, umfasst die Codeanordnung einen Code, der einer Aufnahme zugeordnet ist und Informationen bezüglich der Position dieser einen Aufnahme enthält.

In einer solchen Ausführungsform ist beispielsweise die Anzahl an Codes der Codeanordnung identisch zu der Anzahl an Aufnahmen, sprich jede Aufnahme hat ihren eigenen Code, der z.B. Informationen bezüglich ihrer Position enthält. Weiter kann ein solcher Code Informationen bezüglich der totalen Anzahl an Aufnahmen und/oder der Dimension des Probenständers umfassen. Diese Art von Information kann jedoch auch auf einem oder mehreren zusätzlichen Codes der Codeanordnung hinterlegt sein, sodass eine derartige Codeanordnung insgesamt mindestens einen Code mehr umfasst als der Probenständer Aufnahmen aufweist.

In einer Ausführungsform des Probenständers, welche mit jeder der bereits genannten Ausführungsformen und mit jeder der noch zu nennenden Ausführungsformen kombiniert werden kann, sofern nicht im Widerspruch dazu, umfasst die Codeanordnung einen Code, der Informationen bezüglich der Position mehrerer Aufnahmen enthält, insbesondere Informationen bezüglich der Lage der mehreren Aufnahmen relativ zur Lage dieses Codes.

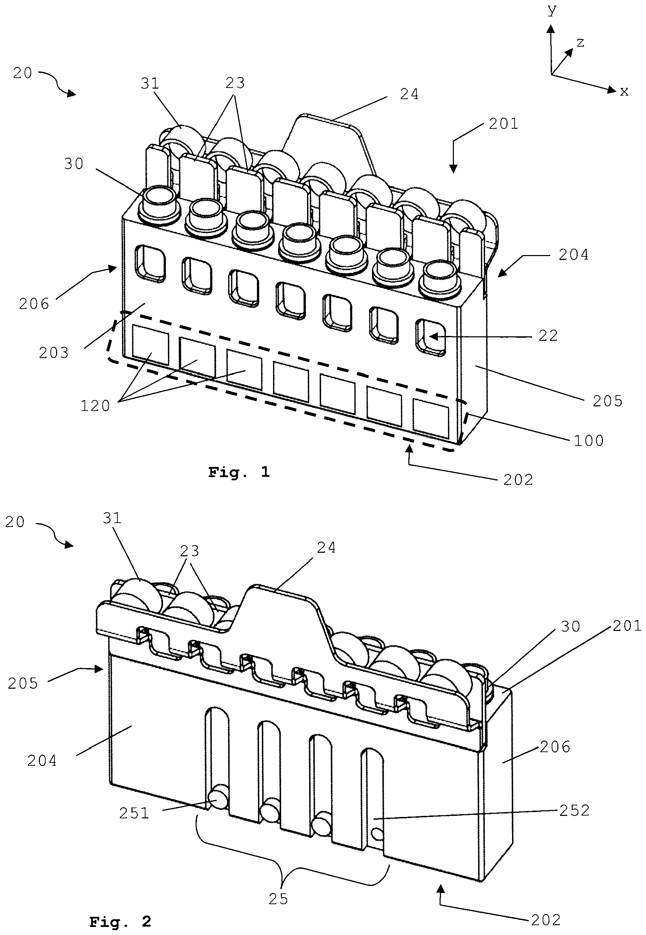

Bei einer solchen Ausführungsform ist es z.B. möglich, dass die Codeanordnung insgesamt nur einen Code umfasst, welcher neben Informationen bezüglich der totalen Anzahl an Aufnahmen und/oder der Dimension des Probenständers auch Informationen bezüglich der Position der mehreren Aufnahmen umfasst, bspw. bezüglich derer Position relativ zur Lage des Codes. Zum Beispiel können folgende Informationen aus dem einen Code der Codeanordnung mit den Koordinaten (x=0; y=0; z=0) ausgelesen werden (Anm.: Die Lage der Koordinatenachse kann der Fig. 1 entnommen werden; die Angabe der Koordinaten kann z.B. die Einheit cm besitzen)
- Probenträger mit 7 Aufnahmen;
- relativ Lage der Aufnahme 1 zum Code (-9; 0; +1);
- relativ Lage der Aufnahme 2 zum Code (-6; 0; +1);
- relativ Lage der Aufnahme 3 zum Code (-3; 0; +1);
- relativ Lage der Aufnahme 4 zum Code (0; 0; +1);
- relativ Lage der Aufnahme 5 zum Code (+3; 0; +1);
- relativ Lage der Aufnahme 6 zum Code (+6; 0; +1);
- relativ Lage der Aufnahme 7 zum Code (+9; 0; +1).

Zusätzlich kann die Codeanordnung z.B. noch mindestens eine der folgenden Informationen enthalten:
- die Aufnahmen sind geeignet für kleine oder grosse Probenröhrchen;
- es handelt sich um einen Probenständer kleiner, mittlerer, oder grosser Grösse.

In einer Ausführungsform des Probenständers, welche mit jeder der bereits genannten Ausführungsformen und mit jeder der noch zu nennenden Ausführungsformen kombiniert werden kann, sofern nicht im Widerspruch dazu, umfasst der Probenständer mindestens ein Sichtfenster, welches die Sicht in mindestens eine Aufnahme ermöglicht.

Ein solches Sichtfenster kann z.B. gebildet sein durch einen Einsatz aus transparentem Material (z.B. Glas oder Kunststoff), durch eine Materialaussparung oder einer Kombination daraus. Das Sichtfenster ermöglicht bspw. das Scannen eines auf dem Probenröhrchen angebrachten Barcodes oder das Lesen einer anderweitigen Aufschrift oder eines Aufdrucks. Auch kann über das Sichtfenster das im Probenröhrchen vorhandene Volumen oder ein Farbumschlag festgestellt werden.

In einer Ausführungsform des Probenständers, welche mit jeder der bereits genannten Ausführungsformen und mit jeder der noch zu nennenden Ausführungsformen kombiniert werden kann, sofern nicht im Widerspruch dazu, umfasst der Probenständer Rückhalteelemente für Deckel der Probenröhrchen, insbesondere Vorsprünge.

Häufig sind die Deckel der Probenröhrchen nach dem Transport oder durch Schütteln mit Probe benetzt, sodass es beispielsweise nach dem Öffnen der Deckel zu einer Kontamination durch heraustropfende Probe und/oder zu einer Kreuzkontamination durch das Vertauschen von Deckeln kommen kann. Um solche Kontaminationsquellen zu eliminieren bietet es sich an, einen sicheren Verwahrungsplatz für die Deckel der geöffneten Probenröhrchen bereitzustellen. Ein solcher befindet sich beispielsweise direkt benachbart zu dem jeweiligen Probenröhrchen, sodass der abgenommene Deckel nicht über ein anderes Probenröhrchen hinweg transportiert werden muss. Kommen Probenröhrchen zum Einsatz, deren Deckel über einen Plastikring mit dem Probenröhrchen verbunden sind, so kann zwar eine Kontamination durch Vertauschen der Deckel unterbunden werden, jedoch kann es immer noch zu einer Kontamination durch tropfende oder spritzende Probe kommen. Wir der Deckel jedoch nach dem kontrollierten Öffnen durch Rückhalteelemente gehalten, so kann auch diese Art der Kontamination vermieden werden.

In einer Ausführungsform des Probenständers, welche mit jeder der bereits genannten Ausführungsformen und mit jeder der noch zu nennenden Ausführungsformen kombiniert werden kann, sofern nicht im Widerspruch dazu, umfasst der Probeständer eine Greifvorrichtung, insbesondere mindestens einen Haltebügel und/oder mindestens eine Haltelasche.

Mithilfe der Greifvorrichtung, welche beispielsweise an der Oberseite oder der linken und/oder rechten Seite des Probenständers angeordnet ist, kann der Anwender oder, bei weiter fortgeschrittener Automatisation, der Roboterarm den Probenträger vereinfacht im Analyseautomat positionieren und herausnehmen.

In einer Ausführungsform des Probenständers, welche mit jeder der bereits genannten Ausführungsformen und mit jeder der noch zu nennenden Ausführungsformen kombiniert werden kann, sofern nicht im Widerspruch dazu, bildet ein Teil der Greifvorrichtung eine Auflagefläche für Deckel der Probenröhrchen.

Werden die Deckel nicht nur zurückgehalten, sondern liegen auf einer Auflagefläche auf, so können sie noch zuverlässiger fixiert werden. Auch wird ein Heruntertropfen von Probe aus dem Deckel in den Analysenautomaten verhindert.

In einer Ausführungsform des Probenständers, welche mit jeder der bereits genannten Ausführungsformen und mit jeder der noch zu nennenden Ausführungsformen kombiniert werden kann, sofern nicht im Widerspruch dazu, umfasst mindestens eine Aufnahme einen Leercode, welcher Informationen bezüglich des Nichtvorhandenseins eines Probenröhrchens in der Aufnahme enthält.

Wird ein nicht vollständig beladener Probenständer eingesetzt, so erfasst der Scanner ganz einfach, an welcher Position sich ein Probenröhrchen befindet und an welcher nicht, sodass Proben nur an den Positionen entnommen bzw. Reagenzien nur an den Positionen dispensiert werden, an denen sich auch tatsächlich ein mit einer Probe befülltes Probenröhrchen befindet. Ohne den Leercode wüsste das System ggfs. nicht, was an der leeren Position zu tun wäre, da ja die Information des auf dem Probenröhrchen aufgebrachten Barcodes fehlt. Beispielsweise kann ein Leercode so im Inneren einer jeden Aufnahme angebracht sein, dass der Leercode durch das Sichtfenster der jeweiligen Aufnahme lesbar ist und bei Vorhandensein eines Probenröhrchens in der Aufnahme von dieser abgedeckt werden würde.

Wie bereits erwähnt betrifft die Erfindung u.a. das Bereitstellen eines Probenträgersystems nach Anspruch 1. Das Probenträgersystem welches mit jeder der bereits genannten Ausführungsformen des Probenständers und mit jeder der noch zu nennenden Ausführungsformen des Probenträgersystems kombiniert werden kann, sofern nicht im Widerspruch dazu, umfasst einen Probenträger mit mindestens einer Probenständeraufnahme und ein Set an Probenständern. Die Probenständeraufnahme und die Probenständer weisen zusammenwirkende Mittel auf, die deren Zugehörigkeit mechanisch kennzeichnen, sodass nur bestimmte Probenständer des Sets in Sollposition in den Probeträger einbringbar sind, wobei ein bestimmter Probenständer aus dem Set nur zu einer bestimmten Probenständeraufnahme zugehörig ist.

Durch die Kennzeichnung der Zugehörigkeit der einzelnen Probenständer des Sets zu der Probenträgeraufnahme, kann eine Verwechslung oder ein fälschliches Einsetzen eines Probenständers in eine nicht für diesen vorgesehene Probenständeraufnahme erschwert oder gar verhindert werden.

Als Kennzeichnung können mechanische Kennzeichnungen oder sensorische Kennzeichnungen verwendet werden. Näheres hierzu wird in den nachstehenden Ausführungsformen erläutert.

Bei den mechanischen Kennzeichen kann es sich zum Beispiel um komplementär ausgebildete Vorsprünge und Ausnehmungen an Probenständer und Probenständeraufnahme handeln. Weist z.B. die Probenständeraufnahme eine keilförmige Führungsnut auf und der Probenständer einen komplementären keilförmigen Vorsprung, so kann dieser Vorsprung in die Führungsnut eingeschient werden und der Probenständer entlang der Führungsnut in die Probenständeraufnahme eingebracht werden. Versucht man jedoch einen Probenständer mit einem im Querschnitt halbrunden Vorsprung in die Probenständeraufnahme einzubringen, so scheitert man, da sich der Vorsprung nicht in die Führungsnut einschienen lässt. Wird zusätzlich z.B. eine farbige Kennzeichnung oder eine Kennzeichnung durch Symbole, Zahlen oder dergleichen an den Probenständeraufnahmen und den Probenständern angebracht, so wird eine falsche Zuordnung nur im Ausnahmefall als letzte Sicherheitsinstanz durch die mechanischen Mittel verhindert, da der Anwender bereits durch die farbige Kennzeichnung oder dergleichen angeleitet wird, ausschliesslich zugehörige Probenständer in die entsprechende Probenständeraufnahme einzubringen.

Wie bereits erwähnt betrifft die Erfindung u.a. das Bereitstellen eines Probenträgersystems nach Anspruch 2. Hier umfassen die zusammenwirkenden Mittel mindestens ein Kennzeichen und mindestens einen Kennzeichenleser. Bei dem Kennzeichenleser handelt es sich insbesondere um einen Hall-Sensor und bei dem Kennzeichen insbesondere um einen Magneten. Ein bestimmter Probenständer aus dem Set ist nur zu einer bestimmten Probenständeraufnahme zugehörig.

Als Alternative zu den mechanischen Mitteln oder in Kombination mit diesen, kann es sich bei den zusammenwirkenden Mittel auch um ein Kennzeichen und einen Kennzeichenleser handeln. Ein solches Kennzeichen kann z.B. ein Magnet sein, der beispielsweise an der Rückseite des Probenständers angeordnet ist. Die Probenständeraufnahme hingegen weist einen Hall-Sensor auf, welcher erkennt, ob der eben in die Probenständeraufnahme eingebrachte Probenständer einen Magneten aufweist oder nicht. Sind zu der Probenständeraufnahme nur Probenständer zugehörig, die einen Magneten aufweisen, so wird ein Alarm oder eine Fehlermeldung ausgelöst, die anzeigt, dass ein nicht zugehöriger Probenständer ohne Magnet eingebracht worden ist. Je grösser die Anzahl an Hall-Sensoren und Magneten, desto mehr Zugehörigkeiten können gekennzeichnet werden. Ein Hall-Sensor kann einerseits das Vorhandensein oder Nichtvorhandensein eines Magneten angeben (Verhältnis Sensoren zu Magneten 1:1; ganze Positionen werden bestimmt). Es können aber z.B. auch auf drei Magneten nur zwei Hall-Sensoren kommen, sodass nicht nur zwischen vorhanden und nichtvorhanden unterschieden wird, sondern auch eine halbe Position (zwischen zwei Sensoren liegend) bestimmt werden kann. So können die kombinatorischen Möglichkeiten aus drei Magnetpositionen mit nur zwei Sensoren genutzt werden.

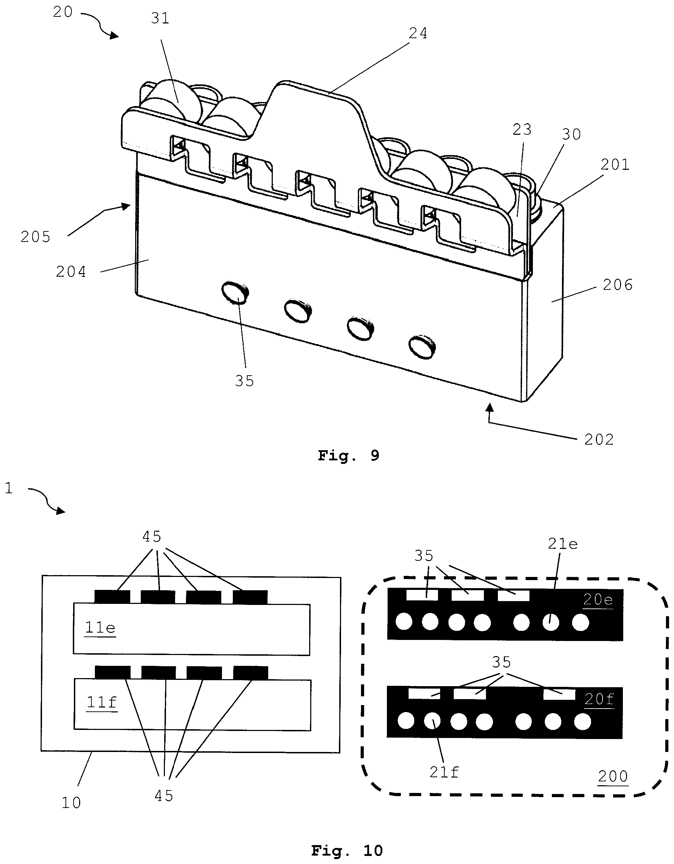

Auch kann es sich bei dem Kennzeichen um einen RFID Tag (RFID steht für engl. radio-frequency identification) und bei dem Kennzeichenleser um ein RFID-Lesegerät handeln. Es sollte jedoch darauf geachtet werden, dass das Lesegerät und der Tag räumlich ausreichend nahe zueinander gebracht werden können, um zu verhindern, dass ein RFID Tag gelesen wird, der gar nicht Teil der zusammenwirkenden Mittel ist. Weiter kann die Antennengrösse des RFID-Lesegeräts entsprechend ausgelegt werden, sodass nur RFID Tags, die sich in einem vordefinierten Radius befinden, gelesen werden können. Um eine ausreichende räumliche Nähe sicherzustellen, kann das RFID-Lesegerät bspw. an einer Innenwand einer Probenständeraufnahme eines Probenträgers angeordnet sein, insbesondere angebracht in einer Ausnehmung, wie z.B. einer Ausfräsung oder Absenkung der Innenwand, welche Ausnehmung zum Schutz des RFID-Lesegeräts auch vergossen sein kann. Der RFID Tag wiederum kann an einer Aussenwand eines Probenständers angebracht sein. Auch der RFID Tag kann insbesondere angebracht sein in einer Ausnehmung, wie z.B. einer Ausfräsung oder Absenkung der Aussenwand, welche Ausnehmung zum Schutz des RFID Tags auch vergossen sein kann. Die Lage des RFID Tags in/an der Aussenwand des Probenständers und die Lage des RFID-Lesegeräts in/an der Innenwand des Probenträgers wird so gewählt, dass Tag und Lesegerät sich räumlich nahe sind, während der Probenständer in die Probenständeraufnahme eingebracht wird oder wenn er eingebracht ist. In einer Variante können die RFID Tags der Probenständer und die RFID-Lesegeräte der Probernständeraufnahmen so angeordnet sein, dass lediglich der RFID Tag und der RFID-Leser eines zugehörigen Paares Probenständer/Probenständeraufnahme ausreichend nahe zusammengebracht werden können, dass das Lesegerät den Tag überhaupt auslesen/erkennen kann. Auch ist eine Anordnung mehrerer RFID-Lesegeräte an der Innenseite der Probenständeraufnahmen und eine Anordnung eines oder mehreren RFID Tags an der Aussenseite eines Probenständers denkbar. Jedes der Lesegeräte erkennt, ob in seiner Nähe ein RFID Tag vorhanden ist oder nicht. Bspw. gibt es insgesamt 5 Lesegeräte, wobei einer Probenständeraufnahme ein Probenständer mit der Tag-Anordnung 0-1-0-1-1 zugehörig ist. Also nur wenn der in diese Probenständeraufnahme eingebrachte Probenständer nahe des ersten und des dritten Lesegeräts keinen RFID Tag aufweist, nahe des zweiten, vierten und fünften aber schon, liegt eine Zugehörigkeit vor. Die dieser Art Zugehörigkeit zugrundeliegende Funktionsweise wird beispielsweise anhand der Figur 10 näher beschrieben.

Denkbar ist auch ein zweistufiges System, bei dem einerseits die Zuordnung über eine Anordnung an Tags, die korrespondiert mit einer Anordnung an Lesegeräten, erfolgt und andererseits über die Information, die die Lesegeräte den Tags tatsächlich entnehmen können.

Gemäss Erfindung ist ein bestimmter Probenständer aus dem Set nur zu einer bestimmten Probenständeraufnahme zugehörig.

In einer erfindungsgemässen Ausführungsform des Probenträgersystems, welche mit jeder der bereits genannten Ausführungsformen und mit jeder der noch zu nennenden Ausführungsformen kombiniert werden kann, sofern nicht im Widerspruch dazu, sind mindestens zwei Probenständer aus dem Set einer bestimmten Probenständeraufnahme zugehörig.

Ein Probenträgersystem einer solchen Ausführungsform umfasst dementsprechend eine grössere Anzahl an Probenständern als an Probenständeraufnahmen. Von Vorteil ist eine solche Ausführungsform beispielsweise, wenn sich in den Probenständern Vials mit empfindlichen Reagenzien befinden, die während des Analyseverfahrens verbraucht werden, es aber aufgrund deren Empfindlichkeit nicht möglich ist, einen grossen Vorrat dieser Reagenzien in den Analyseautomaten einzubringen. Sind die Reagenzien in einem Probenständer aufgebraucht, so kann dieser Probenständer aus dem Probenträger entnommen werden und durch einen bislang in kontrollierter Umgebung (z.B. gekühlt und/oder abgedunkelt) gelagerten zweiten Probenständer ersetzt werden. Dieser zweite Probenständer beinhaltet bereits mit den benötigten Reagenzien befüllt Vials und ist derselben Probenständeraufnahme zugehörig, wie der zuvor entnommene Probenständer. Die mindestens zwei Probenständer aus dem Set, welche ein und derselben bestimmten Probenständeraufnahme zugehörig sind, können baugleich sein. D.h., sie weisen dieselbe Dimension auf und/oder besitzen dieselbe Anzahl an Positionen. Alternativ kann es sich aber auch um zwei oder mehr sich in Dimension und/oder Anzahl an Positionen unterscheidende Probenständer handeln. Die Probenständeraufnahme des Probenträgers kann so individuell und abhängig vom Analyseprozess mit Proben und/oder Reagenzien bestückt werden.

Sind mindestens zwei Probenständer aus dem Set einer bestimmten Probenständeraufnahme zugehörig, so kann beispielsweise die Codeanordnung Informationen darüber enthalten, um welchen Probenständer aus dem Set es sich handelt. Gibt es bspw. drei Probenständer (A, B und C), die einer bestimmten Probenständeraufnahme zugehörig sind, so kann der Codeanordnung entnommen werden, ob es sich bei dem vorliegenden Probenständer um den Probenständer A, B oder C handelt.

In einer Ausführungsform des Probenträgersystems, welche mit jeder der bereits genannten Ausführungsformen und mit jeder der noch zu nennenden Ausführungsformen kombiniert werden kann, sofern nicht im Widerspruch dazu, umfasst der Probenträger mindestens zwei Probenständeraufnahmen unterschiedlicher Dimension, denen ein bestimmter Probenständer aus dem Set zugehörig ist.

Diese Ausführungsform ermöglicht den flexiblen Einsatz eines Probenständers im Probenträger selbst. Ein kleiner Probenständer (z.B. zur Aufnahme von sieben Probenröhrchen) muss somit nicht zwangsläufig in die entsprechend dimensionierte Probenständeraufnahme eingebracht werden, sondern kann auch in eine grösser dimensionierte Probenaufnahme (z.B. für Probenständer mit zehn Probenröhrchen) eingebracht werden.

In einer erfindungsgemässen Ausführungsform des Probenträgersystems, welche mit jeder der bereits genannten Ausführungsformen und mit jeder der noch zu nennenden Ausführungsformen kombiniert werden kann, sofern nicht im Widerspruch dazu, umfasst das Set mindestens einen weiteren Probeständer, welcher mindestens einer der zwei Probenständeraufnahmen unterschiedlicher Dimension zugehörig ist. Der mindestens eine weitere Probenständer weist insbesondere eine unterschiedliche Dimension und/oder unterschiedliche totale Anzahl an Aufnahmen auf. Die Lage der Aufnahmen der unterschiedlichen Probenständer unterscheidet sich bevorzugt in derselben Probenständeraufnahme.

Eine solche Ausführungsform erhöht die Flexibilität des Einsatzes des Probenträgersystems. Beispielsweise kann der Probenträger fünf Probenständeraufnahmen aufweisen, wovon es sich bei zweien um grosse Probenständeraufnahmen (z.B. zur Aufnahme von Probenständern mit je zehn Probenröhrchen) handelt und bei dreien um kleine Probenständeraufnahmen (z.B. zur Aufnahme von Probenständern mit je sieben Probenröhrchen). Enthält das Set an Probenständern neben zwei grossen Probenständern auch noch vier kleine Probenständer (und nicht nur drei kleine Probenständer, wie bei einem Verhältnis von 1:1 (Probenständer: Probenständeraufnahme) der Fall), wovon einer nicht nur zugehörig ist zu einer der kleinen Probenständeraufnahmen, sondern auch zu einer der grossen Probenständeraufnahmen, so können die in diesen Probenständer eingebrachten Probenröhrchen entweder in der grossen Probenständeraufnahme oder in der kleinen Probenständeraufnahme analysiert werden. Über die Auswahl des Probenständers kann so eine Anpassung an die Anzahl der zu analysierenden Proben erfolgen, ohne dass der Probenträger selbst ausgetauscht werden müsste.

Ist die Lage der Aufnahmen für die Probenröhrchen im kleinen Probenständer und im grossen Probenständer nun so gewählt, dass sich im in den Probenständer eingebrachten Zustand die Lage der Aufnahmen des einen (z.B. grossen) Probenständers von der Lage der Aufnahmen des anderen (z.B. kleinen) Probenständers unterscheidet, so kann z.B. ein Pipettierroboter anhand der abweichenden Lage der Aufnahmen erkennen, dass der falsche Probeständer in die Probenständeraufnahme eingebracht wurde. Eine Fehlermeldung bzw. ein Unterbruch der automatisierten Analyse ermöglicht dann, den Fehler zu korrigieren.

In einer erfindungsgemässen Ausführungsform des Probenträgersystems, welche mit jeder der bereits genannten Ausführungsformen und mit jeder der noch zu nennenden Ausführungsformen kombiniert werden kann, sofern nicht im Widerspruch dazu, erfolgt das Zusammenwirken der mechanischen Mittel nach dem Schlüssel-Schloss-Prinzip.

Das Schlüssel-Schloss-Prinzip beschreibt zwei oder mehrere komplementäre Strukturen, die räumlich zueinander passen müssen, um ihre Funktion zu erfüllen. Beispielsweise können die mechanischen Mittel so ausgebildet sein, dass sie die Zugehörigkeit von Probenständer und Probenständeraufnahme eben nach diesem Prinzip kennzeichnen. Der Probenständer kann z.B. ein Muster an Vorsprüngen an seiner Unterseite aufweisen ("Schlüssel"), wohingegen die Probenständeraufnahme komplementär zu den Vorsprüngen ausgebildete Vertiefungen ("Schloss") aufweist, sodass der Probenständer in die Probenständeraufnahme eingebracht werden kann. Der Probenträger ist dann bereit zum Einsatz, sprich, bereit seine Funktion zu erfüllen.

In einer erfindungsgemässen Ausführungsform des Probenträgersystems, welche mit jeder der bereits genannten Ausführungsformen und mit jeder der noch zu nennenden Ausführungsformen kombiniert werden kann, sofern nicht im Widerspruch dazu, sind die zusammenwirkenden mechanischen Mittel gebildet durch mindestens eines der Folgenden oder eine Kombination daraus:
- mindestens eine Führungsnut an einem Probenständer, insbesondere an dessen Aussenseite, und mindestens einem Führungsvorsprung an einer Probenständeraufnahme, insbesondere an mindestens einer die Probenständeraufnahme begrenzenden Seite;
- mindestens einen Führungsvorsprung an einem Probenständer, insbesondere an dessen Aussenseite, und mindestens eine Führungsnut an einer Probenständeraufnahme, insbesondere an mindestens einer die Probenständeraufnahme begrenzenden Seite;
- mindestens eine Vertiefung an einem Probenständer, insbesondere an dessen Boden, und mindestens einen Zapfen an einer Probenständeraufnahme, insbesondere an deren Boden;
- mindestens einen Zapfen an einem Probenständer, insbesondere an dessen Boden, und mindestens eine Vertiefung an einer Probenständeraufnahme, insbesondere an deren Boden.

Die mechanischen Mittel können, wie eben beschrieben, auf diverse Arten ausgebildet sein, auch ist es möglich diese Arten untereinander zu kombinieren. So kann ein Probenständer am Boden beispielsweise ein Muster an Zapfen und Vertiefungen und die diesem Probenständer zugehörige Probenständeraufnahme ein entsprechend komplementäres Muster an Zapfen und Vertiefungen aufweisen. Darüber hinaus kann ein zugehöriges Paar Probenständer/Probenständeraufnahme sowohl über Zapfen und Vertiefungen, als auch über Führungsvorsprünge und Führungsnuten verfügen. Alternativ kann der Probenständer mehr als eine Führungsnut und/oder mehr als einen Führungsvorsprung aufweisen. Diese mehreren Führungsnuten und/oder Führungsvorsprünge können benachbart zueinander oder beabstandet zueinander sein. Z.B. kann eine Führungsnut an der linken Seite und eine weitere Führungsnut an der rechten Seite angeordnet sein. Auch können mehrere Führungsnuten an der Rückseite des Probenständers angeordnet sein uns zwar nebeneinander. Die eben beschriebenen Ausführungsformen lassen sich selbstverständlich übertragen auf zugehörig ausgebildete Probenständeraufnahmen.

In einer erfindungsgemässen Ausführungsform des Probenträgersystems, welche mit jeder der bereits genannten Ausführungsformen und mit jeder der noch zu nennenden Ausführungsformen kombiniert werden kann, sofern nicht im Widerspruch dazu, umfasst der Probenträger mindestens eine Temperierungseinheit, welche ein Heizen, Kühlen und/oder Halten einer Temperatur oder eines Temperaturbereichs ermöglicht, insbesondere mindestens eine Leitung für ein Kühlfluid und/oder mindestens ein Peltier-Element.

Wird das Probenträgersystem ausgestattet mit einer Temperierungseinheit, so können empfindliche Proben durch Kühlen einerseits stabilisiert und länger haltbar gemacht werden, andererseits können in den Proberöhrchen ablaufende Reaktionen durch Zunahme und/oder Abnahme der Temperatur kontrolliert werden. Beispielsweise kann die Gesamtanalysezeit verkürzt werden, indem den Proben beim Ablauf einer endothermen Reaktion Wärme zugeführt wird. Als Kühlfluid in Frage kommen z.B. Wasser, aber auch andere Kühlmittel oder Kühlmittelmischungen, wie beispielsweise sonst eher als Lösemittel bekannte Flüssigkeiten, wie Alkohole (Ethanol, Isopropanol,...) oder Ether. Ebenfalls als Kühlfluid können gekühlte Luft, Stickstoff oder andere vorzugsweise inerte Gase und Gasmischungen eingesetzt werden.

In einer erfindungsgemässen Ausführungsform des Probenträgersystems, welche mit jeder der bereits genannten Ausführungsformen und mit jeder der noch zu nennenden Ausführungsformen kombiniert werden kann, sofern nicht im Widerspruch dazu, umfasst mindestens eine Probenständeraufnahme einen Kondenswasserablass, insbesondere eine Kondenswasserrinne oder eine konische Bodenfläche versehen mit einer Auslassöffnung.

Ein solcher Kondenswasserablass ist geeignet, um Kondenswasser, welches sich im Probenträger sammelt, abzulassen. Beispielsweise tendieren Probenständer, die mitsamt den Proben bis zur Analyse im Kühlschrank aufbewahrt wurden, dazu, bei Raumtemperatur zu beschlagen. Diese kondensierte Feuchtigkeit sammelt sich dann in den Probenständeraufnahmen bzw. im Probenträger.

Ausführungsbeispiele werden nachstehend anhand von Figuren noch näher erläutert. Es zeigen
Fig. 1 eine Ausführungsform eines Probenständers (Frontansicht);
Fig. 2. eine Ausführungsform eines Probenständers (Rückansicht);
Fig. 3 eine Ausführungsform eines Probenträgersystems;
Fig. 4 eine Rückansicht des Probenträgersystems aus Figur 3;
Fig. 5 eine schematische Draufsicht einer Ausführungsform eines Probenträgersystems (nicht erfindungsgemäss);
Fig. 6 eine schematische Draufsicht einer weiteren Ausführungsform eines Probenträgersystems;
Fig. 7 eine schematische Draufsicht einer wiederum weiteren Ausführungsform eines Probenträgersystems (nicht erfindungsgemäss);
Fig. 8a eine schematische Draufsicht einer zusätzlichen Ausführungsform eines Probenträgersystems;
Fig. 8b eine schematische Draufsicht zweier Ausschnitte des Probenträgersystems aus Figur 8a mit in den Probenträger eingebrachten unterschiedlichen Probenständern;
Fig. 9 eine weitere Ausführungsform eines Probenständers (Rückansicht); und
Fig. 10 eine schematische Draufsicht einer Ausführungsform eines Probenträgersystems mit Kennzeichenleser.

In Figur 1 ist eine Ausführungsform eines Probenständers 20 in einer Frontansicht zu sehen. Der Probenständer 20 weist eine Codeanordnung 100 mit insgesamt sieben Codes 120 auf. Weiter umfasst der Probenständer 20 dieselbe Anzahl an Sichtfenster 22 und an sich in den Aufnahmen für Probenröhrchen befindlichen Probenröhrchen 30. Die Deckel 31 der Probenröhrchen werden mithilfe von Rückhalteelementen 23 gehalten, sodass ein ungewolltes Zurückschnappen verhindert wird. Hinter den Vorsprüngen ist eine Auflagefläche bereitgestellt, auf der die Deckel 21 zu liegen kommen. Die Auflagefläche ist in diesem Beispiel kombiniert ausgebildet mit der Greifvorrichtung 24. Diese dient zum einfacheren Transport und besseren Greifen des Probenständers 20. Dem Probenständer 20 ist eine Oberseite 201, eine Unterseite 202, eine Vorderseite 203, eine Rückseite 204, eine rechte Seite 205 und eine linke Seite 206 zugewiesen. Weiter eingezeichnet ist ein Koordinatensystem, welches verwendet werden kann, um die Position einzelner Aufnahmen relativ zur Lage eines Codes zu beschreiben.

Fig. 2 wiederum zeigt eine Rückansicht einer Ausführungsform eines Probenständers 20. Neben den bereits in Figur 1 erläuterten unterschiedlichen Seiten 201, 202, 203, 204, 205 und 206 des Probenständers sind neben Probenröhrchen 30 und ihren Deckeln 31 auch Rückhalteelemente 23 und eine Greifvorrichtung 24 zu sehen. Weiter zu erkennen sind die mechanischen Mittel 25, welche eine Zuordnung des Probenständers 20 zu einer Probenständeraufnahme eines Probenträgers (hier nicht gezeigt) ermöglichen. Die mechanischen Mittel 25 des gezeigten Ausführungsbeispiels umfassen vier Führungsnuten 252 und drei, einen Teil der Führungsnuten blockierende Führungsvorsprünge 252. Der Probenständer 20 kann dann über die nicht-blockierte Führungsnut 252 und einen Führungsvorsprung in der Probenständeraufnahme eines Probenträgers (hier nicht gezeigt), z.B. vergleichbar ausgebildet zu den gezeigten Führungsvorsprüngen 251, geführt in besagten Probenträger (hier nicht gezeigt) eingebracht werden. Dies funktioniert jedoch nur, wenn die mechanischen Mittel 25 des Probenständers und die mechanischen Mittel der Probenständeraufnahme tatsächlich zusammenwirken, z.B. indem sie mindestens teilweise komplementär gestaltet sind.

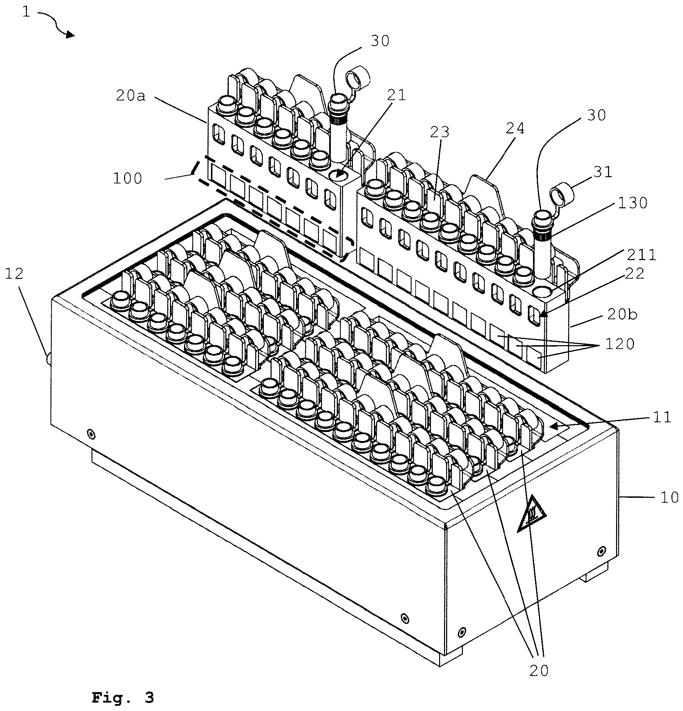

In der Fig. 3 zu sehen ist eine Ausführungsform eines Probenträgersystems 1. Das Probenträgersystem 1 umfasst einen Probenträger 10 und mehrere Probenständer 20. Der Probenträger 10 umfasst eine Temperierungseinheit 12 in Form von Kühlfluidanschlüssen für ein Kühlfluid (z.B. Wasser, Isopropanol, Luft, Stickstoff, ...) und weist insgesamt acht Probenständeraufnahmen 11 auf. Abgebildet sind ebenfalls acht Probenständer 20, wovon zwei der Probenständer 20a, 20b in einem (noch) nicht in den Probenträger 10 eingebrachten Zustand gezeigt sind. Die beiden Probenständer 20a, 20b sind im Wesentlichen baugleich, der Übersichtlichkeit halber sind jedoch nicht alle Bezugszeichen für beide Probenständer 20a, 20b eingezeichnet. Der Probenständer 20a links im Bild umfasst sieben Aufnahmen für Probenröhrchen 21. Gezeigt sind sechs in den Probenständer 20aeingebrachte und ein (noch) nicht im Probenständer 20a befindliches Probenröhrchen 30. Weiter umfasst der Probenständer 20a eine Codeanordnung 100 mit insgesamt sieben Codes 120, also einem Code 120 je Aufnahme 21. Der ansonsten baugleiche Probenständer 20b rechts im Bild umfasst zehn Aufnahmen für Probenröhrchen 21. Gezeigt sind neun in den Probenständer eingebrachte und ein (noch) nicht im Probenständer 20b befindliches Probenröhrchen 30, anhand dessen Aufnahme die Lage einer Aufnahmeachse 210 gezeigt ist. Die Codeanordnung 100 des Probenständers 20b umfasst zehn Codes 120, ebenfalls einen Code 120 je Aufnahme 21. Im Probenständer 20b weiter gekennzeichnet, jedoch auch Teil des Probenständers 20a, sind Sichtfenster 22, Aufnahmeöffnungen 211 der Aufnahmen für die Probenröhrchen 21, Rückhaltelemente 23 und eine Greifvorrichtung 24. An einem der Probenröhrchen 30 weiter gekennzeichnet sind exemplarisch ein Deckel 31 und ein Probenröhrchen-Code 130.

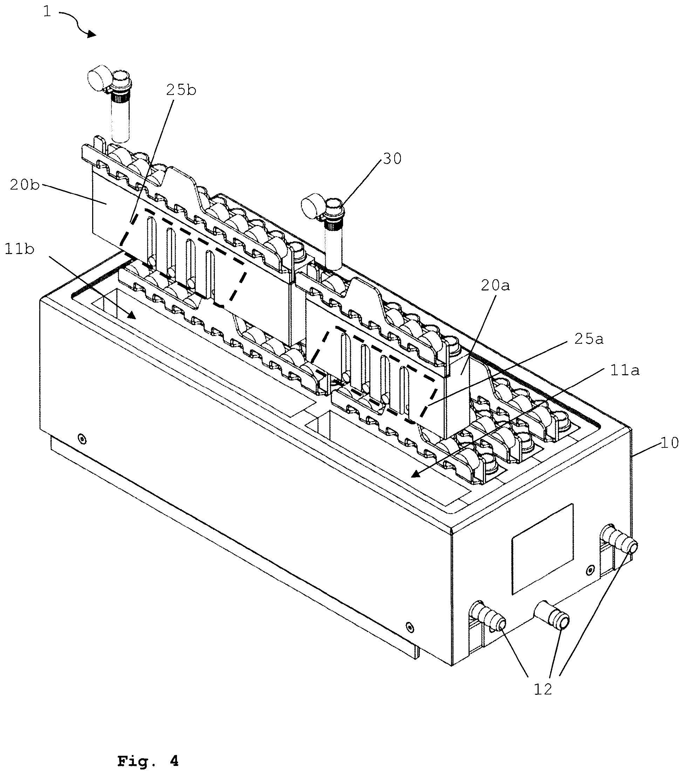

Fig. 4 zeigt eine Rückansicht des Probenträgersystems 1 aus Figur 3. Nun links im Bild zu sehen ist der Probenständer 20b mit seinen insgesamt zehn Aufnahmen für Probenröhrchen 30 und rechts im Bild der Probenständer 20a mit seinen insgesamt sieben Aufnahmen für Probenröhrchen. Deutlich zu erkennen sind die Kühlfluidanschlüsse der Temperierungseinheit 12 des Probenträgers 10. Weiter zu erkennen sind die mechanischen Mittel 25a, 25b der Probenständer 20a, 20b. Es fällt auf, dass diese identisch ausgebildet sind und es somit möglich ist, den kleineren Probenständer 25a sowohl in die linke Probenständeraufnahme 11b als auch in die rechte Probenständeraufnahme 11a einzusetzen. Der Probenständer 20a ist somit zugehörig zu zwei unterschiedlichen Probenständeraufnahmen 11a, 11b.

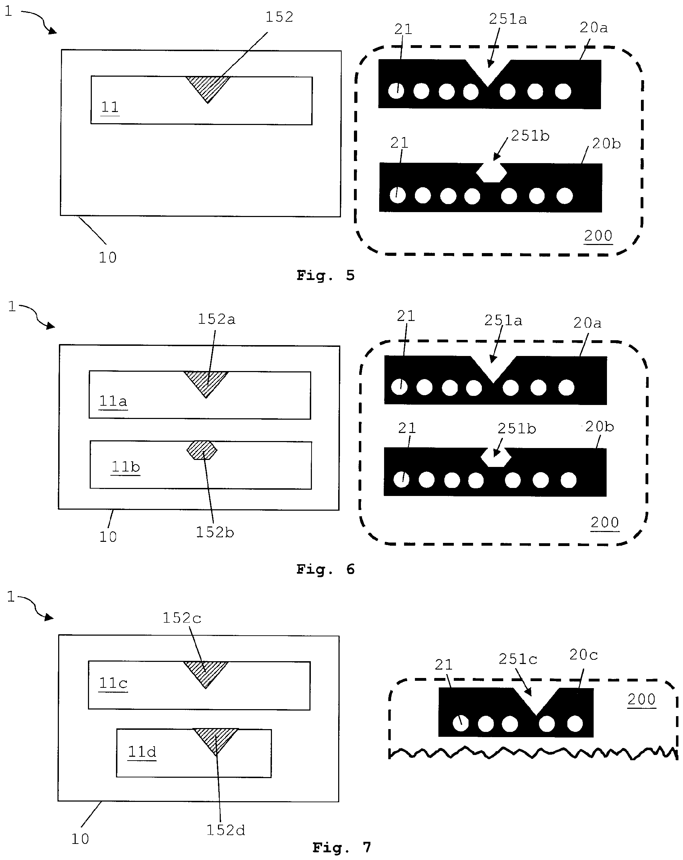

In Fig. 5 gezeigt ist eine schematische Sicht aus der Vogelperspektive auf eine Ausführungsform eines Probenträgersystems 1, welches einen Probenträger 10 mit einer Probenständeraufnahme 11 und ein Set an Probernständern 200 mit zwei Probenständern 20a, 20b unterschiedlicher Ausführung umfasst. Beide Probenständer 20a, 20b weisen je total sieben Aufnahmen 21 für Probenröhrchen auf. Die Probenständeraufnahme 11 weist einen Führungsvorsprung 152 auf, wohingegen jedoch nur ein Probenständer 20a des Sets 200 eine dazu komplementäre Führungsnut 251a aufweist. Der andere Probenstände 20b kann nicht in die Probenaufnahme 11 des Probenträgers 10 eingebracht werden, da seine Führungsnut 251b nicht komplementär zusammenwirkt (z.B. nach dem Schlüssel-Schloss-Prinzip) mit dem Führungsvorsprung 152 der Probenständeraufnahme 11. Somit ist nur der eine Probenständer 20a dem Probenträger 10 bzw. dessen einer Probenständeraufnahme 11 zugehörig.

Fig. 6 zeigt eine schematische Draufsicht auf eine weitere Ausführungsform eines Probenträgersystems 1. Dieses umfasst einen Probenträger 10 mit zwei Probenständeraufnahmen 11a, 11b und einem Set an Probenständern 200 identisch zu dem in Fig. 5 gezeigten Set 200. Der Führungsvorsprung 152a der Probenständeraufnahme 11a ist komplementär zu der Führungsnut 251a des Probenständers 20a, wohingegen der Führungsvorsprung 152b der Probenständeraufnahme 11b komplementär zu der Führungsnut 251b des Probenständers 20b ist. Somit ist je ein Probenständer 20a, 20b aus dem Set 200 zugehörig zu je einer Probenständeraufnahme 11a, 11b des Probenträgers 10.

In Fig. 7 zu sehen ist eine schematische Draufsicht auf eine weitere Ausführungsform eines Probenträgersystems 1. Dieses umfasst einen Probenträger 10 mit zwei Probenträgeraufnahmen 11c, 11d unterschiedlicher Grösse, welche identisch ausgebildete Führungsvorsprünge 152c, 152d aufweisen, und ein Set an Probenständern 200, wobei nur einer der Probenständer 20c des Sets 200 abgebildet ist. Dieser Probenständer 20c weist eine Führungsnut 251c auf, die komplementär zu den Führungsvorsprüngen 152c, 152d der Probenständeraufnahmen 252c, 252d ausgebildet ist. Somit ist der Probenständer 20c zugehörig zu zwei bzw. in diesem Fall sogar zu allen Probenständeraufnahmen 11c, 11d des Probenträgers 10. Da er so dimensioniert ist, dass er von seiner Grösse her in beide Aufnahme 11c, 11d passt, kann er je nach Bedarf in die eine oder in die andere Aufnahme eingesetzt werden.

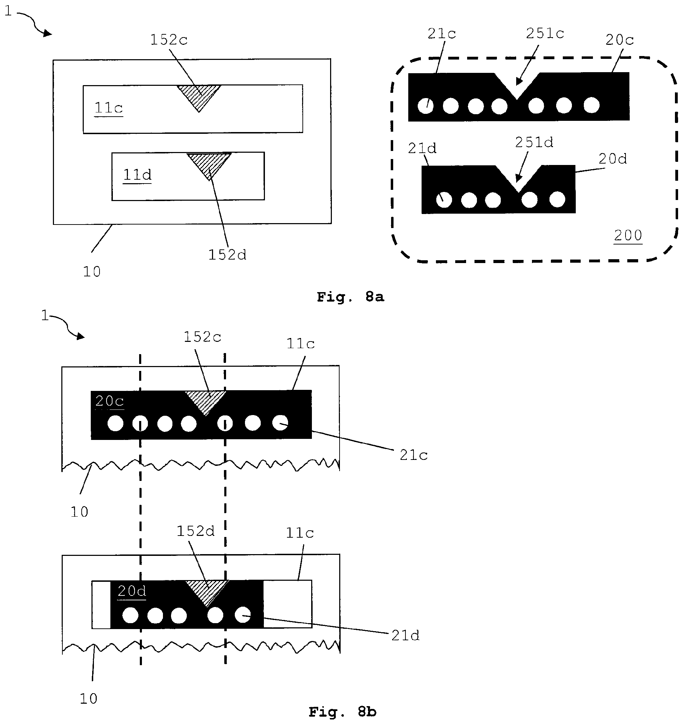

Fig. 8a zeigt eine schematische Draufsicht auf eine zusätzliche Ausführungsform eines Probenträgersystems 1.

Dieses umfasst einen Probenträger 10 mit zwei Probenträgeraufnahmen 11c, 11d unterschiedlicher Grösse, welche identisch ausgebildete Führungsvorsprünge 152c, 152d aufweisen, und ein Set an Probenständern 200. Dieses Set 200 umfasst einen Probenständer 20c mit sieben Aufnahmen 21c für Probenröhrchen und einen Probenständer 20d mit fünf Aufnahmen 21d für Probenröhrchen. Die Führungsnuten 251c, 251d beider Probenständer 20c, 20d sind komplementär ausgebildet zu den identischen Führungsvorsprüngen 152c, 152d der Probenständeraufnahmen 11c, 11d. Aufgrund der unterschiedlichen Dimension der Probenständeraufnahmen 11c, 11d kann der Probenständer 20c trotz der komplementären mechanischen Mittel nur in die Probenständeraufnahme 11c eingebracht werden, wohingegen der Probenständer 20d in beide Probenständeraufnahmen 11c, 11d eingebracht werden kann.

Fig. 8b zeigt eine schematische Draufsicht auf zwei Ausschnitte des Probenträgersystems 1 aus Figur 8a, einmal mit in die Probenständeraufnahme 11c des Probenträgers 10 eingebrachtem Probenständer 20c und einmal mit in die Probenständeraufnahme 11c des Probenträgers 10 eingebrachtem Probenständer 20d. Vergleicht man die Lage der Aufnahmen 21c (Probenständer 20c in Probenständeraufnahme 11c) mit der Lage der Aufnahmen 21d (Probenständer 20d in Probenständeraufnahme 11c), so stellt man fest, dass diese sich unterscheiden. Die Aufnahmen 21c des Probenständers 20c kommen jeweils an einer anderen Stelle in der Probenständeraufnahme 11c zu liegen, als die Aufnahmen 21d des Probenständers 20d (siehe bspw. gestrichelte Hilfslinien). Einem Pipettierroboter ist es so möglich zu erkennen, dass versehentlich der falsche, wenn auch ebenfalls zu der Probenständeraufnahme zugehörige Probenständer, in den Probenträger eingesetzt wurde.

Fig. 9 zeigt eine Rückansicht einer weiteren Ausführungsform eines Probenständers 20. Dieser Probenständer entspricht im Wesentlichen einem Probenständer wie bereits in den Fig. 1 und 2 gezeigt. Jedoch unterscheidet sich der Probenständer 20 von demjenigen der Fig. 2 durch die Art der zusammenwirkenden Mittel, die die Zugehörigkeit von der Probenständeraufnahme und dem Probenständer kennzeichnen. Anstelle von mechanischen Mitteln umfasst der Probenständer 20 hier mehrere, genau genommen vier, Kennzeichen 35 in Form von Magneten. Die Probenständeraufnahme des Probenträgers (hier nicht gezeigt) hingegen umfasst einen Kennzeichenleser, bspw. in Form von vier Hall-Sensoren.

Fig. 10 zeigt eine schematische Draufsicht auf eine Ausführungsform eines Probenträgersystems 1. Dieses umfasst einen Probenträger 10 mit zwei Probenständeraufnahmen 11e, 11f und einem Set an Probenständern 200 mit insgesamt zwei Probenständern 20e, 20f. Diese sind mit je drei Kennzeichen 35, z.B. in der Form von Magneten, ausgestattet, deren Anordnung um respektive am Probenständer sich bei den beiden Probenständern 20e, 20f unterscheidet. Probenständer 20e hat sozusagen eine Leerstelle an der vierten Position, wohingegen Probenständer 20f eine Leerstelle an der dritten Position aufweist. Die Probenständeraufnahmen 11e, 11f des Probenträgers 10 hingegen weisen je vier Kennzeichenleser 45, z.B. Hall-Sensoren, auf. Diese sind an vergleichbaren Stellen angeordnet und sind in der Lage zu erkennen, an welcher bzw. welchen der vier Position der eingebrachte Probenständer Kennzeichen 35 aufweist und an welchen nicht. Der Probenständeraufnahme 11e kann beispielsweise der Probenständer 20e mit der Kennzeichenanordnung 1-1-1-0 zugeordnet sein, wohingegen der Probenständeraufnahme 11f der Probenständer 20f mit der Kennzeichenanordnung 1-1-0-1 zugeordnet ist.

**Bezugszeichenliste**

| | |
|---|---|
| 1 | Probenträgersystem |
| 10 | Probenträger |
| 11, 11a, 11b, 11c, 11d, 11e, 11f | Probenständeraufnahme |
| 12 | Temperierungseinheit |
| 15 | Mechanische Mittel Probenständeraufnahme |
| 151, 151a, 151b, 151c, 151d | Führungsnut Probenständeraufnahme |
| 152 | Führungsvorsprung Probenständeraufnahme |
| 20, 20a, 20b, 20c, 20d, 20e, 20f | Probenständer |
| 200 | Set an Probenständern |
| 201 | Oberseite Probenständer |
| 202 | Unterseite Probenständer |
| 203 | Vorderseite Probenständer |
| 204 | Rückseite Probenständer |
| 205 | Rechte Seite Probenständer |
| 206 | Linke Seite Probenständer |
| 21, 21a, 21b, 21c, 21d, 21e, 21f | Aufnahme für Probenröhrchen |
| 210 | Aufnahmeachse |
| 211 | Aufnahmeöffnung |
| 22 | Sichtfenster |
| 23 | Rückhalteelement |
| 24 | Greifvorrichtung |
| 25, 25a, 25b | Mechanische Mittel Probenständer |
| 251 | Führungsnut Probenständer |
| 252, 252a, 252b, 252c, 252d | Führungsvorsprung Probenständer |
| 100 | Codeanordnung |
| 120 | Code Probenständer |
| 30 | Probenröhrchen |
| 31 | Deckel |
| 130 | Code Probenröhrchen |
| 35 | Kennzeichen |
| 45 | Kennzeichenleser |

## Patentansprüche

1. Probenträgersystem (1) umfassend einen Probenträger (10) mit mindestens zwei Probenständeraufnahmen (11) und ein Set an Probenständern (20) mit je mindestens einer axial ausgedehnten Aufnahme für ein Probenröhrchen, wobei die Probenständeraufnahmen (11) und die Probenständer (20) zusammenwirkende Mittel aufweisen, die deren Zugehörigkeit mechanisch kennzeichnen, sodass nur bestimmte Probenständer des Sets in Sollposition in den Probeträger (10) einbringbar sind,
wobei ein bestimmter Probenständer aus dem Set nur zu einer bestimmten Probenständeraufnahme zugehörig ist.

2. Probenträgersystem (1) umfassend einen Probenträger (10) mit mindestens zwei Probenständeraufnahmen (11) und ein Set an Probenständern (20), wobei die Probenständeraufnahmen (11) und die Probenständer (20) zusammenwirkende Mittel aufweisen, die deren Zugehörigkeit sensorisch kennzeichnen,
wobei die zusammenwirkenden Mittel mindestens ein Kennzeichen (35) und mindestens einen Kennzeichenleser (45) umfassen, und
wobei ein bestimmter Probenständer aus dem Set nur zu einer bestimmten Probenständeraufnahme zugehörig ist.

3. Probenträgersystem (1) nach Anspruch 2, wobei die zusammenwirkenden Mittel mindestens einen Hall-Sensor als Kennzeichenleser (45) und mindestens einen Magneten als Kennzeichen (35) umfassen.

4. Probenträgersystem (1) nach einem der Ansprüche 1 bis 3, wobei das Set an Probenständern (20) einen weiteren bestimmten Probenständer (20c) umfasst und der Probenträger (10) mindestens zwei Probenständeraufnahmen (11c, 11d) unterschiedlicher Dimension Länge, Breite und/oder Höhe umfasst, denen der weitere bestimmte Probenständer (20c) zugehörig ist.

5. Probenträgersystem (1) nach einem der Ansprüche 1 bis 4, wobei das Set mindestens einen weiteren bzw. wiederum weiteren Probenständer (20d) umfasst und der Probenträger (10) mindestens zwei Probenständeraufnahmen (11c, 11d) unterschiedlicher Dimension Länge, Breite und/oder Höhe umfasst, wobei der weitere bzw. wiederum weitere Probenständer (20d) mindestens einer der mindestens zwei Probenständeraufnahmen (11c, 11d) unterschiedlicher Dimension Länge, Breite und/oder Höhe zugehörig ist, und wobei der mindestens eine weitere bzw. wiederum weitere Probenständer (20d) insbesondere eine unterschiedliche Dimension Länge, Breite und/oder Höhe und/oder unterschiedliche totale Anzahl an Aufnahmen (21) aufweist und wobei sich bevorzugt die Lage der Aufnahmen (21) der unterschiedlichen Probenständer (20c, 20d) in derselben Probenständeraufnahme (11c, 11d) unterscheidet.

6. Probenträgersystem (1) nach einem der Ansprüche 1 bis 5, wobei das Zusammenwirken der mechanischen Mittel (15, 25) nach dem Schlüssel-Schloss-Prinzip erfolgt.

7. Probenträgersystem (1) nach einem der Ansprüche 1 und 3 bis 6, wobei die zusammenwirkenden mechanischen Mittel (15, 25) gebildet sind durch mindestens eines der Folgenden oder eine Kombination daraus:
- mindestens eine Führungsnut (251) an einem Probenständer (20), insbesondere an dessen Aussenseite, und mindestens einem Führungsvorsprung (152) an einer Probenständeraufnahme (11), insbesondere an mindestens einer die Probenständeraufnahme (11) begrenzenden Seite;
- mindestens einen Führungsvorsprung (252) an einem Probenständer (20), insbesondere an dessen Aussenseite, und mindestens eine Führungsnut (151) an einer Probenständeraufnahme (11), insbesondere an mindestens einer die Probenständeraufnahme (11) begrenzenden Seite;
- mindestens eine Vertiefung an einem Probenständer (20), insbesondere an dessen Boden, und mindestens einen Zapfen an einer Probenständeraufnahme (11), insbesondere an deren Boden;
- mindestens einen Zapfen an einem Probenständer (20), insbesondere an dessen Boden, und mindestens eine Vertiefung an einer Probenständeraufnahme (11), insbesondere an deren Boden.

8. Probenträgersystem (1) nach einem der Ansprüche 1 bis 7, wobei der Probenträger (10) mindestens eine Temperierungseinheit (12) umfasst, welche ein Heizen, Kühlen und/oder Halten einer Temperatur oder eines Temperaturbereichs ermöglicht, insbesondere mindestens eine Leitung für ein Kühlfluid und/oder mindestens ein Peltier-Element.

9. Probenträgersystem (1) nach einem der Ansprüche 1 bis 8, wobei mindestens eine Probenständeraufnahme (11) einen Kondenswasserablass umfasst, insbesondere eine Kondenswasserrinne oder eine konische Bodenfläche versehen mit einer Auslassöffnung.

10. Probenträgersystem (1) nach einem der Ansprüche 1 bis 9, wobei mindestens ein Probenständer (20) des Sets an Probenständern (20) mindestens eine axial ausgedehnte Aufnahme (21) für ein Probenröhrchen (30) und eine auf der Aussenseite des Probenständers (20) angeordnete Codeanordnung (100) umfasst, wobei die Codeanordnung (100) sowohl Informationen bezüglich der Position der mindestens einen Aufnahme (21) als auch Informationen bezüglich der totalen Anzahl an Aufnahmen (21) und/oder der Dimension Länge, Breite und/oder Höhe des Probenständers (20) enthält.

11. Probenträgersystem (1) nach Anspruch 10, wobei die Codeanordnung (100) einen Code (120) umfasst, der einer Aufnahme (21) zugeordnet ist und Informationen bezüglich der Position dieser einen Aufnahme (21) enthält.

12. Probenträgersystem (1) nach Anspruch 10 oder Anspruch 11, wobei die Codeanordnung (100) einen Code (120) umfasst, der Informationen bezüglich der Position mehrerer Aufnahmen (21) enthält, insbesondere Informationen bezüglich der Lage der mehreren Aufnahmen (21) relativ zur Lage dieses Codes (120) .

13. Probenträgersystem (1) nach einem der Ansprüche 10 bis 12, wobei der mindestens eine Probenständer (20) des Sets an Probenständern (20) mindestens ein Sichtfenster (22) umfasst, welches die Sicht in mindestens eine Aufnahme (21) ermöglicht.

14. Probenträgersystem (1) nach einem der Ansprüche 10 bis 13, wobei der mindestens eine Probenständer (20) des Sets an Probenständern (20) Rückhalteelemente (23) für Deckel (31) der Probenröhrchen (30) umfasst, insbesondere Vorsprünge (23).

15. Verwendung eines Probenträgersystems (1) nach einem der Ansprüche 1 oder 4 bis 14 zum Verhindern eines fälschlichen Einsetzens eines Probenständers (20) des Sets in eine nicht für diesen Probenständer (20) vorgesehene Probenständeraufnahme.

## Claims

1. Sample carrier system (1) comprising a sample carrier (10) having at least two sample rack receptacles (11) and a set of sample racks (20) with each at least one axially extended receptacle for a sample tube, wherein the sample rack receptacles (11) and the sample rack (20) have interacting means which characterize their affiliation mechanically, so that only specific sample racks of the set can be inserted into the sample carrier (10) in desired position,
wherein one specific sample rack of the set is associated with one specific sample rack receptacle only.

2. Sample carrier system (1) comprising a sample carrier (10) with at least two sample rack receptacles (11) and a set of sample racks (20), wherein the sample rack receptacles (11) and the sample rack (20) have interacting means which characterize their affiliation sensorially,
wherein the interacting means comprise at least one identifier (35) and at least one identifier reader (45), and
wherein one specific sample rack of the set is associated with one specific sample rack receptacle only.

3. Sample carrier system (1) according to claim 2, wherein the interacting means comprise at least one Hall sensor as identifier reader (45) and at least one magnet as identifier (35) .

4. Sample carrier system (1) according to one of the claims 1 to 3, wherein the set of sample racks (20) comprises a further specific sample rack (20c) and the sample carrier (10) comprises at least two sample carrier receptacles (11c, 11d) of different length, width and/or height dimension, to which the further specific sample rack (20c) is associated.

5. Sample carrier system (1) according to one of the claims 1 to 4, wherein the set comprises at least one further or again further sample rack (20d) and the sample carrier (10) comprises at least two sample rack receptacles (11c, 11d) of different length, width and/or height dimension, wherein the further or again further sample rack (20d) is associated with at least one of the at least two sample rack receptacles (11c, 11d) of different length, width and/or height dimension, and wherein the at least one further or again further sample rack (20d) in particular has a different length, width and/or height dimension and/or different total number of receptacles (21) and wherein preferably the position of the receptacles (21) of the different sample racks (20c, 20d) in the same sample rack receptacle (11c, 11d) differs.

6. Sample carrier system (1) according to one of the claims 1 to 5, wherein the interaction of the mechanical means (15, 25) is based on the key-lock principle.

7. Sample carrier system (1) according to one of the claims 1 and 3 to 6, wherein the interacting mechanical means (15, 25) are formed by at least one of the following or a combination thereof:
- at least one guide groove (251) on a sample rack (20), in particular on its outside, and at least one guide projection (152) on a sample rack receptacle (11), in particular on at least one side delimiting the sample rack receptacle (11);
- at least one guide projection (252) on a sample rack (20), in particular on its outside, and at least one guide groove (151) on a sample rack receptacle (11), in particular on at least one side delimiting the sample rack receptacle (11);
- at least one recess on a sample rack (20), in particular on its bottom, and at least one pin on a sample rack receptacle (11), in particular on its bottom;
- at least one pin on a sample rack (20), in particular on its bottom, and at least one recess on a sample rack receptacle (11), in particular on its bottom.

8. Sample carrier system (1) according to one of the claims 1 to 7, wherein the sample carrier (10) comprises at least one temperature control unit (12) which enables heating, cooling and/or keeping a temperature or a temperature range, in particular at least one pipe for a cooling fluid and/or at least one Peltier element.

9. Sample carrier system (1) according to one of the claims 1 to 8, wherein at least one sample rack receptacle (11) comprises a drain for condensed water, in particular a flume for condensed water or a conic bottom area provided with an outlet opening.

10. Sample carrier system (1) according to one of the claims 1 to 9, wherein at least one sample rack (20) of the set of sample racks (20) comprises at least one axially extended receptacle (21) for a sample tube (30) and a code arrangement (100) arranged on the outside of the sample rack (20), wherein the code arrangement (100) comprises both information regarding the position of the at least one receptacle (21) and information regarding the total number of receptacles (21) and/or the length, width and/or height dimension of the sample rack (20).

11. Sample carrier system (1) according to claim 10, wherein the code arrangement (100) comprises a code (120) associated with a receptacle (21) and comprising information regarding the position of said one receptacle (21).

12. Sample carrier system (1) according to claim 10 or claim 11, wherein the code arrangement (100) comprises a code (120) comprising information regarding the position of multiple receptacles (21), in particular information regarding the position of the multiple receptacles (21) relative to the position of this code (120).

13. Sample carrier system (1) according to one of the claims 10 to 12, wherein the at least one sample rack (20) of the set of sample racks (20) comprises at least one inspection window (22) that enables the view in at least one receptacle (21).

14. Sample carrier system (1) according to one of the claims 10 to 13, wherein the at least one sample rack (20) of the set of sample racks (20) comprises detention elements (23) for covers (31) of the sample tubes (30), in particular protrusions (23).

15. Use of a sample carrier system (1) according to one of the claims 1 or 4 to 14 to prevent a wrong insertion of a sample rack (20) of the set in a sample rack receptacle not intended for this sample rack (20).

## Revendications

1. Système de porte-échantillon (1) comprenant un porte-échantillon (10) avec au moins deux logements de supports d'échantillon (11) et un jeu de supports d'échantillon (20) avec chacun au moins un logement s'étendant dans le sens axial pour un tube à essai, les logements de supports d'échantillon (11) et les supports d'échantillon (20) présentant des moyens de coopération qui définissent mécaniquement leur appartenance, de sorte que seuls certains supports d'échantillon du jeu peuvent être insérés en position de consigne dans le porte-échantillon (10), un support d'échantillon donné du jeu n'étant associé qu'à un logement de support d'échantillon donné.

2. Système de porte-échantillon (1) comprenant un porte-échantillon (10) avec au moins deux logements de supports d'échantillon (11) et un jeu de supports d'échantillon (20), les logements de supports d'échantillon (11) et les supports d'échantillon (20) présentant des moyens de coopération qui définissent sensoriellement leur appartenance, les moyens de coopération comprenant au moins une caractéristique (35) et au moins un lecteur de caractéristique (45), et un support d'échantillon donné du jeu n'étant associé qu'à un logement de support d'échantillon donné.

3. Système de porte-échantillon (1) selon la revendication 2, dans lequel les moyens de coopération comprennent au moins un capteur à effet Hall comme lecteur de caractéristique (45) et au moins un aimant comme caractéristique (35).

4. Système de porte-échantillon (1) selon l'une des revendications 1 à 3, dans lequel le jeu de supports d'échantillon (20) comprend un autre support d'échantillon spécifique (20c) et le porte-échantillon (10) comprend au moins deux logements de supports d'échantillon (11c, 11d) de dimensions différentes en longueur, largeur et/ou hauteur, auxquels l'autre support d'échantillon spécifique (20c) est associé.

5. Système de porte-échantillon (1) selon l'une des revendications 1 à 4, dans lequel le jeu comprend au moins un autre ou plusieurs autres supports d'échantillon (20d) et le porte-échantillon (10) comprend au moins deux logements de supports d'échantillon (11c, 11d) de dimensions différentes en longueur, largeur et/ou hauteur, l'autre ou les autres supports d'échantillon (20d) étant associé(s) à au moins un des au moins deux logements de supports d'échantillon (11c, 11d) de dimensions différentes en longueur, largeur et/ou hauteur, et le au moins un autre ou les autres supports d'échantillon (20d) présentant un nombre total de logements (21) de dimensions différentes en longueur, largeur et/ou hauteur, et la position des logements (21) des différents supports d'échantillon (20c, 20d) étant de préférence différente dans le même logement de support d'échantillon (11c, 11d).

6. Système de porte-échantillon (1) selon l'une des revendications 1 à 5, dans lequel la coopération des moyens mécaniques (15, 25) s'effectue suivant le principe clé-serrure.

7. Système de porte-échantillon (1) selon l'une des revendications 1 et 3 à 6, dans lequel les moyens mécaniques de coopération (15, 25) sont formés suivant au moins l'un des principes suivants ou suivant une combinaison de ces derniers :
- au moins une rainure de guidage (251) sur un support d'échantillon (20), en particulier sur le côté extérieur de ce dernier, et au moins une saillie de guidage (152) sur un logement de support d'échantillon (11), en particulier sur au moins un côté délimitant le logement de support d'échantillon (11) ;
- au moins une saillie de guidage (252) sur un support d'échantillon (20), en particulier sur le côté extérieur de ce dernier, et au moins une rainure de guidage (151) sur un logement de support d'échantillon (11), en particulier sur au moins un côté délimitant le logement de support d'échantillon (11) ;
- au moins une encoche sur un support d'échantillon (20), en particulier sur le fond de ce dernier, et au moins un tenon sur un logement de support d'échantillon (11), en particulier sur le fond de ce dernier ;
- au moins un tenon sur un support d'échantillon (20), en particulier sur le fond de ce dernier, et au moins une encoche sur un logement de support d'échantillon (11), en particulier sur le fond de ce dernier.

8. Système de porte-échantillon (1) selon l'une des revendications 1 à 7, dans lequel le porte-échantillon (10) comprend au moins une unité de régulation de la température (12) qui permet de chauffer, de refroidir et/ou de maintenir une température ou une plage de température, en particulier au moins une conduite pour un fluide de refroidissement et/ou au moins un élément de Peltier.

9. Système de porte-échantillon (1) selon l'une des revendications 1 à 8, dans lequel au moins un logement de support d'échantillon (11) comprend une vidange de l'eau de condensation, en particulier une rigole d'eau de condensation ou un fond conique muni d'un orifice de sortie.

10. Système de porte-échantillon (1) selon l'une des revendications 1 à 9, dans lequel au moins un support d'échantillon (20) du jeu de supports d'échantillon (20) comprend au moins un logement (21) s'étendant dans le sens axial pour un tube à essai (30) et un agencement de code (100) sur le côté extérieur du support d'échantillon (20), l'agencement de code (100) contenant des informations sur la position du au moins un logement (21) et des informations sur le nombre total de logements (21) et/ou sur les dimensions en longueur, largeur et/ou hauteur du support d'échantillon (20).

11. Système de porte-échantillon (1) selon la revendication 10, dans lequel l'agencement de code (100) comprend un code (120) qui est associé à un logement (21) et qui contient des informations sur la position de ce logement (21).

12. Système de porte-échantillon (1) selon la revendication 10 ou 11, dans lequel l'agencement de code (100) comprend un code (120) qui contient des informations sur la position de plusieurs logements (21), en particulier des informations sur la position desdits plusieurs logements (21) par rapport à la position de ce code (120).

13. Système de porte-échantillon (1) selon l'une des revendications 10 à 12, dans lequel le au moins un support d'échantillon (20) du jeu de supports d'échantillon (20) comprend au moins une fenêtre de visualisation qui permet de voir dans au moins un logement (21).

14. Système de porte-échantillon (1) selon l'une des revendications 10 à 13, dans lequel le au moins un support d'échantillon (20) du jeu de supports d'échantillon (20) comprend des éléments de retenue (23) pour les couvercles (31) des tubes à essai (30), en particulier des saillies (23).

15. Utilisation d'un système de porte-échantillon (1) selon l'une des revendications 1 ou 4 à 14 pour éviter d'installer par erreur un support d'échantillon (20) du jeu dans un logement de support d'échantillon non prévu pour ce support d'échantillon (20).
